# EUROPEAN PATENT APPLICATION

(11) **EP 0 931 969 A2**
(43) Date of publication of application: **28.07.1999**
(21) Application number: 98118951.7
(22) Date of filing: 07.10.1998
(51) Int. Cl.: F16L 37/23

(54) **A coupling device**

(30) Priority: 22.01.1998 SE 9800195
(71) Applicant: Ezze AB, 335 28 Gnosjö (SE)
(72) Inventor: Psajd, Rihard, 33194 Värnamo (SE)
(74) Representative: Linde, Leif

(57) **Abstract**

A coupling device consists of a coupling housing (2) and a coupling nipple (2), the coupling housing (2) comprising a coupling sleeve (10) into which the coupling nipple (2) is introducable to a sealing position. The wall of the coupling sleeve (10) is formed with through, radial openings (12) elongated in the axial direction of the sleeve (10) and in which locking balls (14) are journaled. The locking balls (14) are radially and axially movable in the elongated openings (12) between a locking position and a releasing position for the coupling nipple (2). In the locking position the locking balls (14) are positioned at the front end of its opening with regard to the direction of introduction of the coupling nipple (2), the balls (14) extending inside the inner surface of the wall of the coupling sleeve (10) and engaging a complementary recess (36) in the coupling nipple (2) so as to lock the coupling nipple (2) in the sealing position when the coupling nipple (2) is in its sealing position in the coupling sleeve (10). In the releasing position the balls (14) are positioned at the inner end of its opening (12) with regard to the direction of introduction of the coupling nipple (2) and radially outside the locking position in which the balls (14) engage the recess of the coupling nipple (2) so as to allow that the coupling nipple (2) is introduced into or withdrawn from the coupling sleeve (10). The coupling housing (2) comprises guiding surfaces (16) so as to guide the balls (14) to the locking position inside the inner surface of the wall of the coupling sleeve (10) when the balls (14) are positioned in their releasing position. A guiding sleeve (30) is provided at the outer surface of the wall of the coupling sleeve (10) and is axially displaceable between a position in which the locking balls (14) are positioned in their locking positions and a position in which the locking balls (14) are positioned in their releasing positions. The locking balls (14) are spring-loaded in the direction of their locking positions, and the guiding sleeve (30) is spring-loaded in the direction of the positions in which the balls (14) are in their locking positions. In order to improve the function of the locking balls (14) they are connected with a common carrier element (20) for common guiding of the displacement of the locking balls (14) in the axial direction between the locking position and the releasing position.

## Description

The present invention relates to a coupling device consisting of two coupling elements connectable with each one of a pair of hoses or the like.

A prior art coupling device of this kind consists of a coupling housing and a coupling nipple, the coupling housing comprising a coupling sleeve into which the coupling nipple is introducable to a sealing position. The wall of the coupling sleeve is formed with through, radial openings elongated in the axial direction of the sleeve and in which locking balls are journaled. The locking balls are radially and axially movable in the elongated openings between a locking position and a releasing position for the coupling nipple. In the locking position the locking balls are positioned at the front end of its opening with regard to the direction of introduction of the coupling nipple, the balls extending inside the inner surface of the wall of the coupling sleeve and engaging a complementary recess in the coupling nipple so as to lock the coupling nipple in the sealing position when the coupling nipple is in its sealing position in the coupling sleeve. In the releasing position the balls are positioned at the inner end of its opening with regard to the direction of introduction of the coupling nipple and radially outside the locking position in which the balls engage the recess of the coupling nipple so as to allow that the coupling nipple is introduced into or withdrawn from the coupling sleeve. The coupling housing comprises guiding surfaces so as to guide the balls to the locking position inside the inner surface of the wall of the coupling sleeve when the balls are positioned in their releasing position. A guiding sleeve is provided at the outer surface of the wall of the coupling sleeve and is axially displaceable between a position in which the locking balls are positioned in their locking positions and a position in which the locking balls are positioned in their releasing positions. The locking balls are spring-loaded in the direction of their locking positions, and the guiding sleeve is spring-loaded in the direction of the positions in which the balls are in their locking positions.

In a coupling device of this kind the coupling nipple can be introduced into the coupling sleeve without requirement for actuation of the guiding sleeve which means that the connection of the coupling housing and the coupling nipple with each other can be provided by means of a simple operation by forcing the coupling nipple into the coupling sleeve. Thereby, the locking balls are displaced in the elongated openings to a position in which the balls are situated radially outside the locking position in which they engage the recess of the coupling nipple, while the locking balls are displaced into the recess to the locking position when the nipple has taken the position in which the recess in the nipple is situated opposite to the balls, the connection between the coupling nipple and the coupling sleeve being thereby completed.

A drawback of the prior art coupling device described above is that the function of the locking balls can be unsatisfying, especially if dirt has arrived into the coupling which can provide for difficulties with regard to the introduction and the withdrawal of the coupling nipple.

The object of the invention is to provide a coupling device of said kind which presents improved properties in said respect.

In order to comply with this object the coupling device is according to the invention characterized in that the locking balls are connected with a common carrier element for common guiding of the displacement of the locking balls in the axial direction between the locking position and the releasing position.

In a coupling device according to the invention there is no risk of deteriorated function of the locking balls, at the same time as there is provided the more gentle and uniform displacement, when the coupling nipple is introduced into and withdrawn from its position in the coupling sleeve. The carrier element of the coupling device according to the invention provides also for the advantage that it is difficult to separate the coupling nipple from the coupling housing when the line in which the coupling device is included is under pressure. Thus, when the line is under pressure it is substantially impossible to displace the locking balls to the releasing position by means of the guiding sleeve, as the pressure in the line acts on the nipple and prevent displacement of the guiding sleeve through the balls and the carrier.

Suitably, the carrier is constituted by an annular element having openings enclosing the balls in the axial direction of the coupling sleeve, the carrier being spring-loaded so as to provide the required spring-loading of the locking balls in the direction of the locking position.

Preferably, the carrier engages the guiding sleeve at a surface which extends in radial direction in relation to the coupling sleeve so as to allow a displacement of the locking balls by means of the guiding sleeve by means of the carrier. Preferably, the carrier is spring-loaded by means of a spring tensioned between the carrier and the coupling sleeve, the spring being adapted to force the carrier against the guiding sleeve at the surface extending radially in relation to the coupling sleeve, so that the carrier and the guiding sleeve can be spring-loaded by means of the same spring.

In a suitable embodiment of the coupling device according to the invention the guiding surfaces of the coupling housing are formed at the inner side of an element connected with the end portion of the coupling sleeve. This element can have an outer annular portion engaging an end surface of the guiding sleeve so as to retain the guiding sleeve to the coupling housing.

An embodiment of the coupling device according to the invention shall be described in the following with reference to the accompanying drawings.
Fig. 1 shows an axial section of an embodiment of a coupling device according to the invention prior to the connection of the parts of the coupling device with each other.
Fig. 2 is an axial section corresponding to Fig. 1 subsequently to the connection of the parts of the coupling device with each other.
Figs. 3 and 4 show sections corresponding to Figs. 1 and 2 in two different stages of the dismounting of the coupling.

The coupling device according to the invention shown in the drawings is intended for connecting two hoses with each other. The coupling device comprises two coupling elements, namely a coupling housing 2 and a coupling nipple 4. The coupling elements 2 and 4 are provided with one connection piece 6 and 8, each, and said hoses can be connected with the connection pieces by means of the desired kind of hose locks or hose clamps.

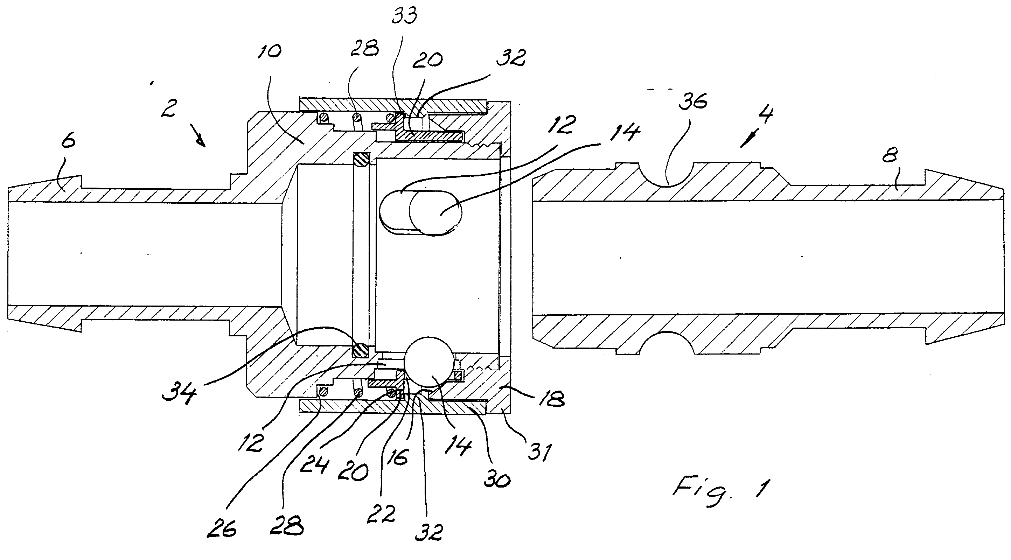

The coupling housing 2 comprises a coupling sleeve 10 of substantially cylindrical shape. In the wall of the coupling sleeve 10 there are provided a number of openings 12 extending radially through said wall. In each opening 12 there is positioned a locking ball 14 and the openings 12 are designed in such a way in relation to the locking balls 14 that the locking balls 14 are displaceable in the radial direction as well as in the axial direction. The radial displacement takes place between an inner locking position in which the balls 14 are positioned in the right part of the openings 12 in Fig. 1 and extend somewhat inside the inner surface of the coupling sleeve 10, and a position to the left in the openings 12 wherein the balls are positioned substantially outside the inner surface of the coupling sleeve 10 in an outer, releasing position. The guiding of the locking balls 14 in the radial direction between the locking position and the releasing position takes place by means of a conical guiding surface 16 which is provided at the inner portion of an annular element 18 screwed onto the end of the coupling sleeve 10. When the locking balls 14 are positioned in the left part of the openings 12 in Fig. 1, the locking balls 14 are positioned at a distance from the guiding surface 16 which means that the locking balls can take a radially outer position substantially outside the inner surface of the coupling sleeve 10. When the locking balls are displaced to the right in the openings 12, the locking balls will engage the guiding surface 16 which thereby guides the locking balls radially inwards to the position of Fig. 1 in which the locking balls extend inside the inner envelope surface of the coupling sleeve 10.

In accordance with the invention the coupling device comprises a carrier formed as an annular element 20 and having openings 22 of circular shape which enclose the locking balls 14 in the axial direction of the coupling sleeve 10. Thus, the carrier 20 provides that the locking balls 14 move in common at their axial displacement in the openings 12. The carrier 20 has a radially outwardly extending portion 24, and between the radially outwardly extending portion 24 and an opposite surface 26 on the coupling sleeve 10 there is positioned a helical spring 28 which acts for displacing the carrier 20 to the right in Fig. 1 which in turn provides that the carrier 20 acts for displacing the locking balls 14 to the right part of the elongated openings 12 wherein the locking balls 14 engage the guiding surface 16 and take their locking positions.

For providing the displacement of the locking balls 14 to the releasing position at the left parts of the elongated openings 12 there is used a guiding sleeve 30 which in an axially displaceable way encloses the coupling sleeve 10 and is retained thereon by means of an outwardly directed projection 31 on the element 18 provided with the guiding surface 16. The guiding sleeve 30 has an annular, inwardly directed projection 32 which by means of a radially directed surface 33 engages the projection 24 of the carrier 20 at the opposite side of the projection from the helical spring 28. Thus, it is by means of the guiding sleeve 30 possible to displace the carrier 20 to the left in Fig. 1 against the action of the spring 28, the locking balls 14 being thereby displaced to the left parts of the elongated openings 12 at a distance from the engagement with the guiding surface 16, viz. to the releasing position.

In the coupling sleeve 10 there is positioned an O-ring 34 adapted to seal the coupling sleeve 10 in relation to the coupling nipple 4 introduced into the coupling sleeve 10.

The coupling nipple 4 has an outer diameter which is in substantial agreement with the inner diameter of the coupling sleeve 10 and allows that the coupling nipple 4 is introduced into the coupling sleeve 10. The coupling nipple 4 has a recess in the form of a peripherally extending groove 36 having a half-circular cross-sectional shape. The locking balls 14 are intended to engage this groove 36 when the coupling nipple 4 is in its position introduced into the coupling sleeve 10.

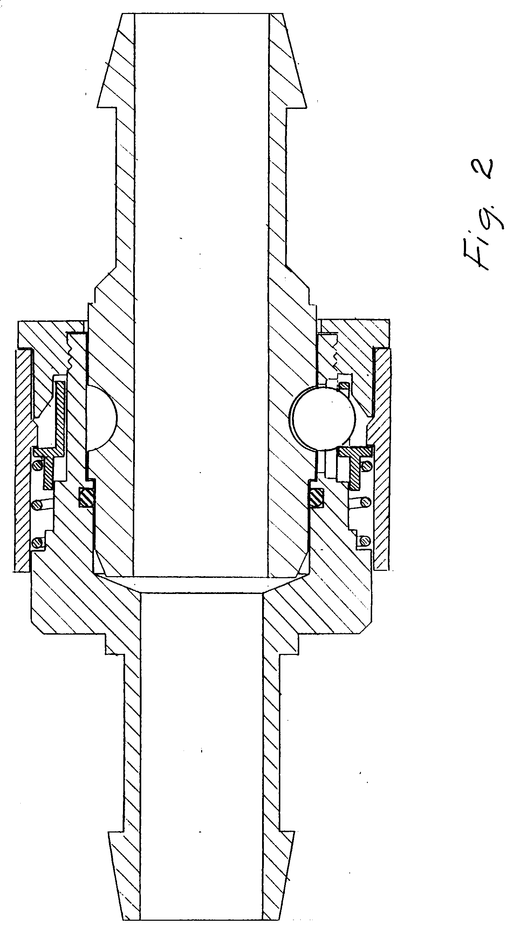

When the coupling nipple 4 is introduced into the coupling sleeve 10 the locking balls 14 are in common displaced in the elongated openings 12 to the left in the drawings. Because of the existence of the carrier 20 there is provided a gentle and uniform displacement of the locking balls 14 without any risk for a prevention of the displacement of the locking balls for example because of dirt in the coupling. When the locking balls 14 are displaced, they are moved away from their engagement with the guiding surface 16. When the locking balls 14 leave their engagement with the guiding surface 16 they can as described above be displaced radially outwards to a position in the plane of the inner surface of the coupling sleeve 10 so that the introduction of the coupling nipple 4 is not prevented. When the coupling nipple 4 has been introduced to the position shown in Fig. 2 in which the coupling nipple 4 sealingly engages the O-ring 34 in the coupling sleeve 10 and the locking balls 14 have by means of the carrier 2 and the spring 28 been returned to their locking positions, the locking balls 14 engage the groove 36 of the coupling nipple 4 and the coupling nipple 4 is locked against withdrawal from the coupling sleeve 10. Thus, it appears that the carrier 20 facilitates the introduction of the coupling nipple into the coupling housing 2 by the fact that the function of the locking balls 4 is facilitated because of the common guiding of the balls by means of the carrier 20. Thus, it appears that the connection of the coupling nipple 4 with the coupling housing 2 takes place by means of one single operation by introducing the coupling nipple 4 into the coupling housing 10. There is not required any other manual action on the coupling device for providing the desired connection of the two hoses connected with the coupling housing and the coupling nipple with each other.

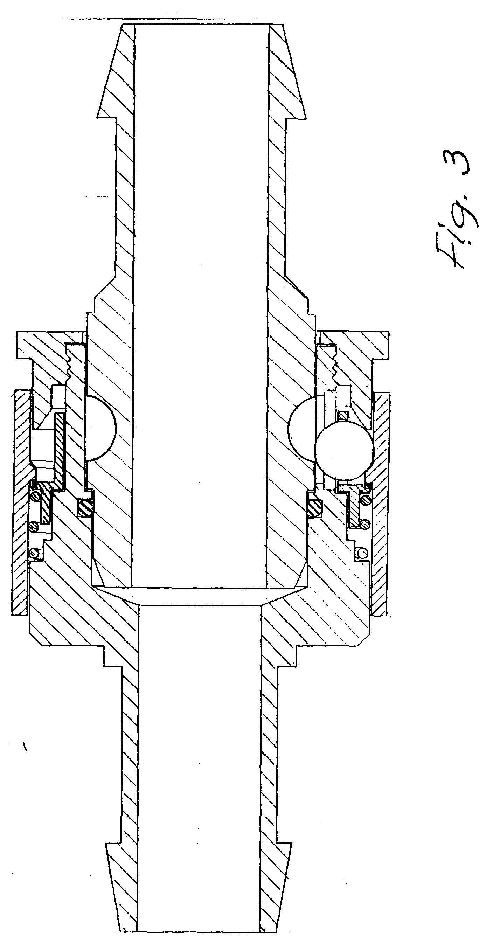

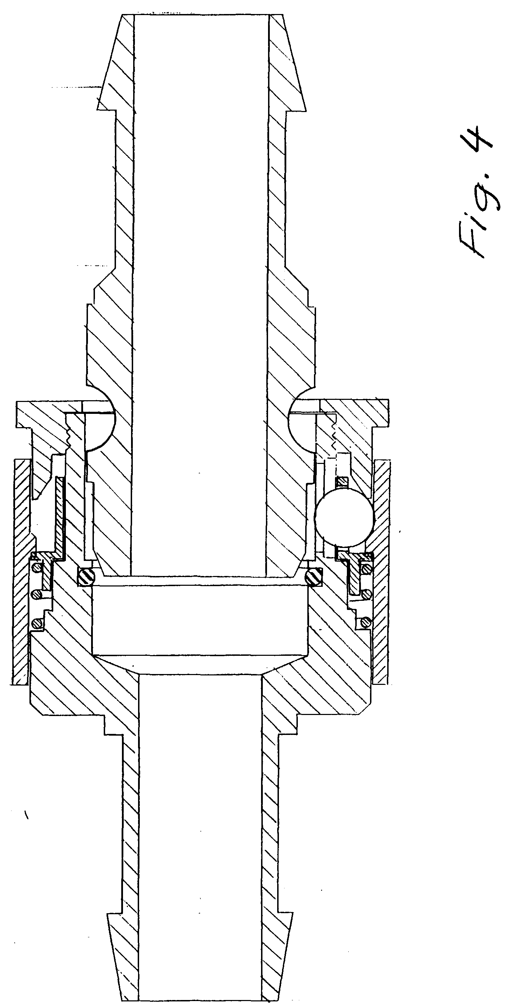

When the coupling nipple 4 shall be withdrawn from the coupling housing 2, the guiding sleeve 30 is as shown in Fig. 3, displaced in the direction against the action of the spring 28, the carrier 20 being thereby displaced together with the guiding sleeve 30 and the carrier 20 displacing the locking balls 14 from their engagement with the guiding surface 16. In this position the locking balls 14 are positioned outside or in the plane of the inner surface of the coupling sleeve 10 which provides that the coupling nipple 4 can without obstruction be withdrawn from the coupling sleeve 10. The stage in which the coupling nipple 4 is withdrawn from the coupling sleeve 10 is shown in Fig. 4. When the coupling nipple 4 has been withdrawn from the coupling housing 10, the guiding sleeve 30 is released, the spring 28 thereby returning the carrier 20 and therewith the locking balls 14 and the guiding sleeve 30 to the position shown in Fig. 1.

The fact that the coupling device according to the invention is provided with the carrier 20 makes it substantially impossible to open the coupling device according to the invention when the line to which the coupling device is connected is under pressure. The pressure in the line is transferred from the coupling nipple 4 to the locking balls 14 which through the carrier 20 in turn transfer the force provided by the pressure to the guiding sleeve 30. This force transmitted to the guiding sleeve 30 makes it substantially impossible to displace the guiding sleeve in a direction providing that the locking balls 14 leave the guiding surface 16 when the line is under pressure.

Thus, this provides for safety against unintended opening of the coupling device as long as the line in which the coupling device is included is under pressure. Thus, the invention has provided a coupling device which is superior to prior art coupling devices of said kind from the functional point of view as well as with regard to security.

The invention can be modified within the scope of the following claims.

## Claims

1. A coupling device consisting of two coupling elements, a coupling housing (2) and a coupling nipple (4), connectable with each one of a pair of hoses or the like, the coupling housing (2) comprising a coupling sleeve (10) into which the coupling nipple (4) is introducable to a sealing position, the wall of the coupling sleeve being provided with through, radially extending openings (12) elongated in the axial direction of the sleeve, in which openings locking balls (14) are journaled radially and axially displaceable between a locking position at the front end of each opening (12) in the direction of introduction of the coupling nipple (4) in which position the balls extend inside the inner surface of the wall of the coupling sleeve and when the coupling nipple (4) is positioned in its sealing position in the coupling sleeve (10) engage a complementary recess (36) in the coupling nipple (4) so as to lock the coupling nipple in the sealing position, and a releasing position at the inner end of each opening (12) in the direction of introduction of the coupling nipple (4) in which position the locking balls are situated radially outside the position for engaging the recess (36) of the coupling nipple (4) so as to allow that the coupling nipple (4) is introduced into and withdrawn from the coupling sleeve (10), said coupling housing (2) comprising guiding surfaces (16) for guiding the balls (14) to the locking position inside the inner surface of the wall of the coupling sleeve when the balls (14) are situated in the releasing position, a guiding sleeve (30) being provided at the outer surface of the wall of the coupling sleeve (10) and axially displaceable between a position in which the locking balls (14) are situated in their locking position and a position in which the locking balls are situated in the releasing position, and the locking balls (14) being spring-loaded in the direction of the locking position and the guiding sleeve (30) being spring-loaded in direction of the position in which the balls are situated in their locking position, **characterized** in that the locking balls (14) are connected with a carrier (20) for providing a common guiding of the movement of the locking balls in the axial direction between the locking position and the releasing position.

2. A coupling device as claimed in claim 1, **characterized** in that the carrier (20) is constituted by an annular element having openings (22) enclosing the balls in the axial direction of the coupling sleeve (10).

3. A coupling device as claimed in claim 1 or 2, **characterized** in that the carrier is spring-loaded for spring-loading the balls (14) in the direction of the locking position.

4. A coupling device as claimed in any of the preceding claims, **characterized** in that the carrier (20) engages the guiding sleeve (30) at a surface extending in radial direction in relation to the coupling sleeve so as to allow that the locking balls (14) are displaced by means of the guiding sleeve (30) through the carrier (20).

5. A coupling device as claimed in claim 3, **characterized** in that the carrier (20) is spring-loaded by means of a spring tensioned between the carrier (20) and the coupling sleeve (10).

6. A coupling device as claimed in claim 4 and 5, **characterized** in that the spring (28) is adapted to force the carrier (20) against the guiding sleeve (30) at the surface extending in radial direction in relation to the coupling sleeve (10) so as to provide that the carrier (20) and the guiding sleeve (30) are spring-loaded by means of the same spring (28).

7. A coupling device as claimed in any of the preceding claims, **characterized** in that the guiding surfaces (16) of the coupling housing (10) are positioned at the inner side of an element (18) connected with the end portion of the coupling sleeve.

8. A coupling device as claimed in claim 7, **characterized** in that the element (18) connected with the end portion of the coupling sleeve (10) has an outer annular portion (31) which is adapted to engage an end surface of the guiding sleeve (30) so as to retain the guiding sleeve to the coupling housing.
